# EUROPEAN PATENT SPECIFICATION

(11) **EP 2 040 940 B1**
(45) Date of publication and mention of the grant of the patent: **26.08.2009**
(21) Application number: 07769075.8
(22) Date of filing: 16.07.2007
(51) Int. Cl.: B60C 11/12

(54) **TYRE TREAD AND LAMELLA SUITABLE FOR ATTACHING INTO VULCANIZATION MOULD TO FORM A SIPE CUT IN A BLOCK OF TYRE TREAD**
REIFENLAUFFLÄCHE UND LAMELLEN, DIE ZUR BEFESTIGUNG IN EINER VULKANISIERUNGSFORM ZUR BILDUNG EINES LAMELLENEINSCHNITTS IN EINEM REIFENLAUFFLÄCHENBLOCK GEEIGNET SIND
BANDE DE ROULEMENT ET LAMELLE APPROPRIÉE POUR FIXER DANS UN MOULE DE VULCANISATION POUR FORMER UNE LAMELLE COUPÉE DANS UN BLOC DE BANDE DE ROULEMENT

(30) Priority: 18.07.2006 SK 1022006
(43) Date of publication of application: 01.04.2009
(73) Proprietor: CONTINENTAL MATADOR RUBBER, S.R.O., 020 01 Púchov (SK)
(72) Inventor: HAJDUCH, Jaroslav, 014 01 Bytca (SK); KOTLAS, Jan, 020 01 Puchov (SK)
(74) Representative: Majlingova, Marta
(86) International application number: PCT/SK2007/050016
(87) International publication number: WO 2008/010778

(56) References cited:
- EP-A- 1 533 141
- EP-A- 1 669 217
- EP-A2- 0 952 011
- WO-A-99/48707
- WO-A-20/05123420
- JP-A- 2000 006 619
- JP-A- 2002 321 509
- JP-A- 2006 069 440

## Description

### Technical Field

The invention concerns a vulcanisation mould design for the production of winter, summer and all-season tyres for motor vehicles, wherein a lamella creates during mould pressing narrow sipes of required shape and amount in the tread blocks in the tread area defined by running surface of the tyre. The sipes, formed in this way, ensure more effective force transfer at the point of tyre contact with road surface.

### Background Art

Tyres, which are designed for use with motor vehicles both in winter and all the year round, are characterized, besides the circumferential and cross tread grooves, by a high number of narrow sipes created by lamellae located in the tread part of the vulcanisation mould cavity. The lamellae are produced by forming operations of sheet metal of material having required properties (corrosion resistance, strength etc. They are attached in the mould non-detachably and secured against removal. They are oriented in radial direction with respect to the tyre rotation axis. The lamellae may adopt the depth of tread grooves given by the tyre profile, or it may be variable, depending on the requirements for the tread. The shape of the lamella viewed in radial direction may be composed of known curves (arc, straight line, parabola and the like) and form a certain pattern (for example the sine function, zigzag. Size and shape of lamellae and thus so sipes are given by the design and size of the tread blocks. The lamellae which are used in one tread, may be identical or of different shape.

Because of their number in winter and all-season tyres, the lamellae create a high number of grip edges to increase the effectiveness of force transfer at the point of tyre contact with road surface. This phenomenon can be utilised on wet, snowy or icy roads.

In the course of force transfer during interaction of the tyre with the road, tread blocks are deformed considerably. The deformation influences markedly driving properties, negatively acts on straight-running stability, influences the tyre response rate. After resolution of the projection of forces into the road plane, the extent of deformation depends on the character of the force acting at a given moment, and it is obvious that the deformation adopts the values of all circle quadrants. The ideal solution in the sense of deformations in the road plane is to use a block without any interruption by sipes or grooves. As this case is undesirable both from legal and technical point of view, it is necessary to interrupt the contiguous tread by grooves. To improve the grip properties, it is necessary to divide the block by narrow sipes, thus influencing adversely the block rigidity. Therefore, various shapes of sipes are used at present: straight with varying depth of the bottom, differently shaped, but mostly having a shape reminding of the goniometric sine function. Shaping the sipe increases rigidity of the block especially in axial direction, partially also in tangential direction to the tyre circumference. The above phenomenon results in the consequence that the block deformation is different in the longitudinal and transverse direction with respect to the sipe.

Recent knowledge proves that various producers start to use variously shaped sipes to achieve increased rigidity in all directions and uniform distribution of strain in the tread block. This leads in the least to minimum deformation during the force transfer, speed of the response on driver's initiative increases, road-traffic safety increases. The knowledge of recently known models of interlockable sipes is as follows:

3-D sipes of the firm Continental, described in the European Patent EP 1 223 054 A1 of January 12th, 2001, have the shape of a wavy line created from alternately arranged arcs of different diameter oriented against each other. A lamella in its bottom part changes to the opposite shape, where arcs of a small diameter are replaced by arcs of a greater diameter and vice versa. Shape modifications of such arrangement may include the shape of a triangle or rectangular tetragon (quadrangle, square) or optionally of their combination. The characteristics of interlocking will differ in dependence on using particular shapes. Interlocking will take place with a time delay.

Solution of the firm Semperit, described in the patent document US 5 350 001 of September 27th, 1994, shows a sipe having the shape of a sine function changing to a shape shifted by 1/4 of the wave length. Repeating in the radial direction depends on the shape, it may take values of 2 or more. For the number 2, the surface of the sipe at the place of intersecting the tyre surface is radially oriented, for higher numbers it is angularly displaced from the radial direction. Solutions having the shape of composite triangle grooves have variously oriented edges.

Patent EP 0 131 246 of the firm Continental describes a zigzag groove contiguously changing from the upper curve into the same curve located in its lower part and shifted by 1/4 of its length.

Patent WO 99/48707 of the firm Goodyear describes a sipe formed by a planar surface with mutually interlocking dome-shaped recesses alternately located at one side and dome-shaped projections at the other side, alternately oriented to the axis of the sipe. The solution has reinforced the tread block in all directions in the lamella plane. Interlocking with respect to the projection shape took place with a certain time delay.

The above described document serves as a basis for further solution of the firm Goodyear according to the document EP 1 533 141 A1, in which there are regularly arranged protrusions from the sipe plane and openings continuously following after each other. Their shape may have a triangular, quadrilateral, ... up to x-lateral cross-section. By this solution the firm Goodyear partially removes slippage, and the outset of interlocking is sharper.

Axial direction - is the direction given by the rotation axis of the tyre on a motor vehicle;

Radial direction - is the direction given by the axis normal to the circumferential circular line and the rotation axis, which it simultaneously intersects;

Tangential direction - is the direction given by the tangent line to the circumferential circular line;

Lamella - is a moulded piece of metal sheet of a material having required properties, defined thickness, firmly attached to the mould cavity in the tread area, giving?? shape and dimensions of (to??) narrow sipes in the tread blocks;

Sipe - is a radially oriented cut, created in the tread blocks of a tyre in the mould; Radial plane - is the plane running through the middle of the sipe, which goes through the x axis of the function creating the periodically repeating element.

### Disclosure of invention

The above disadvantages are eliminated to great extent by a tyre tread containing at least one row of blocks arranged in the circumferential direction of the tyre, where at least one of the blocks is provided with one or more shaped 3D sipes in radial direction, and the shaped sipe is delimited by two mutually matching shaped surfaces - sides of the sipe, created by a lamella in the course of vulcanisation. Its subject-matter is that each side of the sipe has the shape of a twice angled surface reminding of letter Z, which is provided, at a given radial depth, with at least one shaped element, interrupting the above broken surface at a certain interval, wherein the broken surface contains two parallel shoulder surfaces interconnected by a sloping wall, and at least one of the parallel shoulder surfaces is in tangential direction provided with at least one shaped element, formed by an angular projection, delimited in radial direction by walls, and the second parallel shoulder surface is provided with angular depression, delimited in radial direction by walls at the same radial depth, wherein the angular projection on one parallel surface is provided with a top surface, and the angular cavity on the second parallel surface with a bottom surface, where the above top surface is connected with the above bottom surface so that they form a contiguous surface, arranged in the radial direction in parallel with the shoulder surfaces and intersecting the sloping wall.

The walls of the shaped element make with the tangential plane acute angles α₁ to α₄, which are either equal or different.

The contiguous surface which is a part of the shaped element, formed by interconnection of the bottom surface of the cavity with the top surface of the projection, may have the shape of a hexagon or quadrangle, and it intersects (interrupts) the sloping wall at a half distance between the parallel shoulder surfaces.

According to a further embodiment, each side of the sipe may contain two shaped elements, arranged symmetrically at a given radial depth on a four-times broken surface, containing three parallel shoulder surfaces, which are interconnected by two sloping walls so that they form a stylized letter U.

The lamella, suitable to be attached inside a vulcanisation mould to create a sipe in a block of tyre tread, has the shape of at least twice broken surface in a shape reminding of letter Z, which is provided, at a given radial depth, with at least one shaped element, interrupting the above broken surfaces at a certain interval, wherein the broken surfaces contain two parallel shoulder surfaces interconnected by a sloping wall, and at least one of the parallel shoulder surfaces is in circumferential direction provided with at least one shaped element, formed by an angular projection, delimited in radial direction by walls, and the second parallel shoulder surface is provided with angular depression, delimited in radial direction by walls at the same radial depth, wherein the angular projection is provided with a top surface, and the angular cavity with a bottom surface, where the above top surface is connected with the above bottom surface so that they form a contiguous surface, arranged in the radial direction in parallel with the shoulder surfaces and intersecting the sloping wall.
The walls of the angular projection and walls of the angular cavity make with the tangential plane acute angles α₁ to α₄, which may be either equal or different. The angular dimension of α₁ to α₄ depends on the required properties of the tyre.

The contiguous surface which is a part of the shaped element and is formed by interconnection of the bottom surface of the cavity with the top surface of the projection, may have the shape of a hexagon or quadrangle, and it intersects (interrupts) the sloping wall at a half distance between the parallel shoulder surfaces.

According to a preferred embodiment, the lamella may contain two shaped elements, arranged symmetrically at a given radial depth on a four-times broken surface, containing three parallel shoulder surfaces, which are interconnected by two sloping walls so that they form a stylized letter U.

It is obvious that lamellae having a shape changed in the axial direction are capable of better load transfer in axial direction. When transferring forces in tangential direction, greater deformation of the blocks occurs. Therefore, the present invention is based on a lamella, where in the radial direction the shape is interrupted at a certain interval and replaced with a shaped projection in the direction inwards the lamella. This prevents long relative movement between individual parts of the tread block and transfer of forces at braking and grip, and at movement in curves. The advantage compared with the lamellae used so far is the shortened interlocking time caused by the horizontal surface, increased rigidity of the tread blocks, marked interlocking onset, better course of tread block wear, better force transfer during the change of states of motion under influence of limitation of relative displacement of individual parts of tread blocks both in radial and axial direction, resulting in increased driving safety and comfort.

### An overview of figures in the drawings

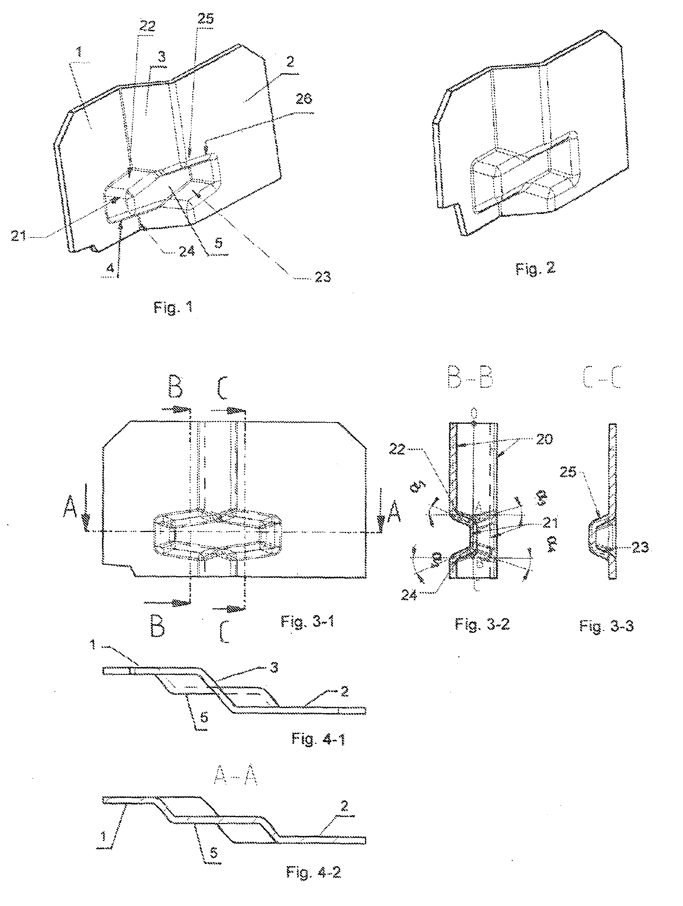

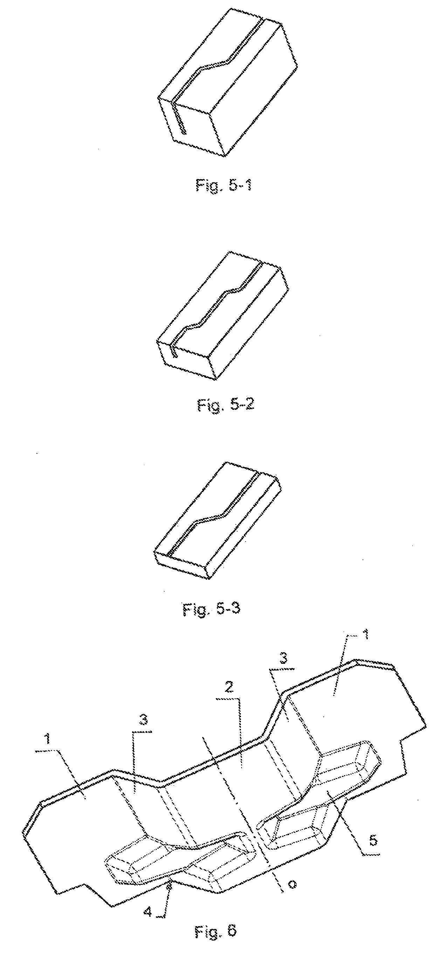

The attached Fig. 1 shows a lamella according to the present invention and Fig. 2 shows another embodiment of the lamella according to the present invention in a perspective view. Figs. 3-1 shows a front view of the lamella and Fig. 3-2 and Fig. 3-3 show sections B-B and C-C through the lamella shown in Fig. 1 and Fig.3-1. Fig. 4-1 shows a top view of the lamella and Fig. 4-2 shows section A-A through the lamella shown in Fig. 1 and Fig. 3-1. Figs. 5-1 to 5-3 show tyre tread blocks with various degrees of tyre wear. Fig. 6 shows a modified extended version of the lamella.

### Examples of invention embodiments

The lamella shown in Fig. 1 is formed by a metal plate twice broken into a shape reminding of letter Z. Its overall radial height (depth) is 0C (Fig. 3-1, Fig. 3-2). The lamella retains its shape of the broken surface within the interval 0A and BC. Its shape is interrupted at the interval AB. The broken surface of the lamella consists of the first shoulder surface 1, the second shoulder surface 2, which is parallel to the shoulder surface 1, and the ends of these first and second shoulder surfaces 1, 2 are joined by the sloping wall 3. At the place, which is during usage situated in the block, the lamella is equipped with a shaped element 4, (Fig. 1) formed by pressing. This shaped element 4 consists of an angular projection, which is located on one of the parallel shoulder surfaces, and is delimited by the walls 21, 22 and 24 and by the top surface, and of an angular depression, situated on the second parallel shoulder surface 2. The angular cavity is delimited by the walls 23, 25 and 26 and by the bottom surface, where the bottom surface is joined with the top surface of the angular projection at the second shoulder surface 2, forming together a continuous surface 5. The continuous surface 5 in Fig. 1 has the shape of a hexagon and in Fig. 2 the shape of a quadrangle. Fig. 3-1 shows an elevation view of the lamella with delineated sections A-A, B-B and C-C, shown in the following figures Fig. 4-2, Fig. 3-2 and Fig. 3-3. One can see in Fig. 3-1 that the section B-B through the lamella goes through the first shoulder surface 1, which is smooth at the interval 0A, and is interrupted by the shaped element 4 at the interval AB, and the first shoulder surface 1 adopts its original condition. The walls 22 and 24 make with the tangential plane acute angles α₁ to α₄, which in this case equal to each other.

In the axial direction, surfaces of the shaped projection are located at different distances and under different angles, resulting from the required properties. Fig. 5-1 shows one block of the tyre tread with a sipe for a non-worn tyre. The shape of the sipe in the course of tread block wear depends on the instantaneous value of the height of the tyre tread block. The sipe shape during the tread block wear at the interval 0A corresponds approximately to 0 to 30 % of the overall sipe height.

Fig. 5-2 shows the sipe shape for the tyre tread block wear at the interval AB, corresponding to approximately 30 to 60 % of the overall sipe height.

Fig. 5-3 shows the sipe shape for the tyre tread block wear at the interval BC, corresponding to approximately 60 to 100 % of the overall sipe height. The sipe in Fig. 5-3 has the same shape as the sipe in Fig. 5-1.

Fig. 6 shows a modified extended version of the lamella. The lamella consists of two shoulder surfaces 1, one shoulder surface 2, which are interconnected by two sloping walls 3 so that they form a stylized letter U. The lamella is equipped with two shaped elements 4 at the same radial depth. The shaped elements 4 on the lamella are formed symmetrically relative to the axis o. The shaped elements 4 consist of the same surfaces and are formed in the same way as described for the above figures.

## Claims

1. Tyre tread containing at least one row of blocks arranged in the circumferential direction of the tyre, where at least one of the blocks is provided with one or more shaped 3D sipes in radial direction, and this shaped sipe is delimited by two mutually matching shaped surfaces - sides of the sipe, created by a lamella in the course of vulcanisation, **characterized in that**
each side of the 3D sipe has the shape of twice broken surface having the shape reminding of letter Z, which is provided, at a given radial depth, with at least one shaped element (4), interrupting the above broken surface at the specific interval (AB), wherein the broken surface contains parallel shoulder surfaces namely the first shoulder surface (1) and the second shoulder surface (2) interconnected by a sloping wall (3), and at least one of the parallel shoulder surfaces (1, 2) is in tangential direction provided with at least one shaped element (4), formed by an angular projection, delimited in radial direction by walls (21, 22 and 24), and the second parallel shoulder surface is provided with an angular depression, delimited in radial direction by walls (23, 25 and 26) at the same radial depth, wherein the angular projection at first shoulder surface (1) is provided with a top surface, and the angular depression at the second shoulder surface (2) is provided with a bottom surface, where the above top surface is connected with the above bottom surface so that they form a continuous surface (5), arranged in the radial direction in parallel with the first and second shoulder surfaces (1, 2) and intersecting the sloping wall (3).

2. Tyre tread according to claim 1, **characterized in that**
the walls (21, 22 and 24) and the walls (23, 25 and 26) make with the tangential plane acute angles α₁ to α₄, which are either equal or different.

3. Tyre tread according to claim 1, **characterized in that**
the contiguous surface (5), formed by joining the bottom surface with the top surface of the projection, has the shape of a hexagon.

4. Tyre tread according to claim 1, **characterized in that**
the continuous surface (5), formed by joining the bottom surface with the top surface of the projection, has the shape of a quadrangle.

5. Tyre tread according to claim 1, 3 or 4, **characterized in that**
the continuous surface (5) intersects (interrupts) the sloping wall at a half of the distance between the parallel first and second shoulder surfaces (1, 2).

6. Tyre tread according to claim 1, **characterized in that**
each side of the sipe contains two shaped elements (4), arranged symmetrically at a given radial depth on a four-times broken surface, containing two first shoulder surfaces (1), and one second shoulder surface (2), which are interconnected by two sloping walls (3) so that they form a stylized letter U.

7. Lamella suitable to be attached inside a vulcanisation mould to create a sipe in a tyre tread block according to any of the claims 1 to 6,
**characterized in that** it has the shape of at least twice broken surface having the shape reminding of letter Z, which is provided, at a given radial depth, with at least one shaped element (4), interrupting the above broken surface at the specific interval (AB), wherein the broken surface contains first shoulder surfaces. (1) and the second shoulder surface (2) interconnected by a sloping wall (3), and at least one of the parallel first and second shoulder surfaces (1, 2) is in circumferential direction provided with at least one shaped element, formed by an angular projection, delimited in radial direction by walls (21, 22 and 24), and the second parallel shoulder surface is provided with an angular depression, delimited in radial direction by walls (23, 25 and 26) at the same radial depth, wherein the angular projection is provided with a top surface, and the angular cavity is provided with a bottom surface, where the above top surface is connected with the above bottom surface so that they form a continuous surface (5), arranged in the radial direction in parallel with the first and second shoulder surfaces (1, 2) and intersecting the sloping wall (3).

8. Lamella according to claim 7, **characterized in that**
the walls (21, 22 and 24) of the angular projection and the walls (23, 25 and 26) of the angular cavity make with the tangential plane acute angles α₁ to α₄, which are either equal or different.

9. Lamella according to claim 7, **characterized in that**
the continuous surface (5) has the shape of a hexagon.

10. Lamella according to claim 7, **characterized in that**
the contiguous surface (5) has the shape of a quadrangle.

11. Lamella according to claim 7, 9 or 10, **characterized in that** the continuous surface (5) interrupts the sloping wall (3) at a half of the distance between the parallel shoulder surfaces.

12. Lamella according to claim 7, **characterized in that**
it contains two shaped elements (4), arranged symmetrically at a given radial depth on a four-times broken surface (1, 2, 3), containing two shoulder surfaces (1), one shoulder surface (2), which are interconnected by two sloping walls (3) so that they form a stylized letter U.

## Patentansprüche

1. Die Reifenlauffläche, die minimal eine in Umfangsrichtung des Reifens angeordnete Blockreihe enthält, wobei minimal einer dieser Blöcke mit einem oder mehreren geformten 3D Lamelleneinschnitten in radialer Richtung versehen ist und dieser geformte Lamelleneinschnitt mit zwei ineinander passenden geformten Flächen - Seiten des Lamelleneinschnitts eingeschränkt ist, gebildet durch die Lamelle während der Vulkanisierung, ist **dadurch gekennzeichnet, dass** jede Seite des 3D Lamelleneinschnitts die Form einer doppelt gebrochenen Fläche in der Form ähnlich des Buchstabens Z hat, die in der festgelegten radialen Tiefe minimal mit einem geformten Element (4) versehen ist, das die angeführte gebrochene Fläche im Intervall (AB) unterbricht, wobei diese gebrochene Fläche parallele Armflächen enthält und das die erste Armfläche (1) und die zweite Armfläche (2) verbunden mit einer schrägen Wand (3), und mindestens eine der parallelen Armflächen (1,2) ist in Tangentialrichtung minimal mit einem geformten Element versehen, gebildet durch einen eckigen Vorsprung in radialer Richtung begrenzt durch die Wände (21, 22 und 24) und die zweite parallele Armfläche mit einer eckigen Ausnehmung in radialer Richtung begrenzt durch die Wände (23, 25 und 26) in der gleichen radialen Tiefe, wobei der eckige Vorsprung auf der einen parallelen Fläche (1) mit einer Scheitelfläche (2) versehen ist und die eckige Ausnehmung auf der anderen parallelen Fläche mit einer Bodenfläche versehen ist, wobei die Scheitelfläche mit der angeführten Bodenfläche so miteinander verbunden sind, dass sie eine zusammenhängende Fläche (5) bilden, in radialer Richtung parallel angeordnet mit den Armflächen (1,2) und die schräge Wand (3) schneidend.

2. Die Reifenlauffläche nach Anspruch 1 ist **dadurch gekennzeichnet, dass** die Wände (21, 22 und 24) und Wände (23, 25 und 26) mit der tangentialen Ebene spitze Winkel α₁ bis α₄ bilden, die gleich oder verschieden sind.

3. Die Reifenlauffläche nach Anspruch 1 ist **dadurch gekennzeichnet, dass** die zusammenhängende Fläche (5), die durch die Verbindung der Bodenfläche der Ausnehmung und der Scheitelfläche des Vorsprungs gebildet ist, die Form eines Sechsecks hat.

4. Die Reifenlauffläche nach Anspruch 1 ist **dadurch gekennzeichnet, dass** die zusammenhängende Fläche (5), die durch die Verbindung der Bodenfläche der Ausnehmung und der Scheitelfläche des Vorsprungs gebildet ist, die Form eines Vierecks hat.

5. Die Reifenlauffläche nach Anspruch 1, 3 oder 4 ist **dadurch gekennzeichnet, dass** die zusammenhängende Fläche (5) die schiefe Wand in der Mitte der Entfernungen zwischen den parallelen Armflächen (1, 2) schneidet (unterbricht).

6. Die Reifenlauffläche nach Anspruch 1 ist **dadurch gekennzeichnet, dass** jede Seite des Lamelleneinschnitts zwei Formelemente (4) enthält, die symmetrisch in der festgelegten radialen Tiefe auf der viermal gebrochenen Fläche angeordnet sind, die zwei Armflächen (1), eine Armfläche (2) enthalten, die mit zwei schiefen Wänden (3) verbunden sind, dass sie den stilisierten Buchstaben U bilden.

7. Die für die Befestigung nach Innen in die Vulkanisierungsform geeignete Lamelle für die Bildung des Lamelleneinschnitts im Block der Reifenlauffläche nach einem der Ansprüche 1 bis 6 ist **dadurch gekennzeichnet, dass** sie die Form einer minimal zweimal gebrochenen Fläche hat, dem Buchstaben Z ähnelnd, die in der festgelegten radialen Tiefe minimal mit einem Formelement (4) versehen ist, das die angeführte gebrochene Fläche (1,2,3) im Intervall (AB) unterbricht, wobei diese gebrochene Fläche die erste Armfläche (1) und die Armfläche (2) verbunden mit der schiefen Wand (3) enthält, und mindesten eine der parallelen ersten und zweiten Armflächen (1,2) in Umfangsrichtung minimal mit einem Formelement versehen ist, gebildet durch einen eckigen Vorsprung in radialer Richtung begrenzt durch die Wände (21, 22 und 24) und die zweite parallele Armfläche mit eckiger Ausnehmung in radialer Richtung durch die Wände (23, 25 und 26) in der gleichen radialen Tiefe begrenzt ist, wobei der eckige Vorsprung mit einer Scheitelfläche versehen ist und die eckige Ausnehmung mit einer Bodenfläche versehen ist, wobei die angeführte Scheitelfläche mit der angeführten Bodenfläche untereinander so verbunden sind, dass sie eine zusammenhängende Fläche (5) bilden, in radialer Richtung parallel mit der ersten und zweiten Armfläche(1,2) angeordnet und die schiefe Wand (3) schneidend.

8. Die Lamelle nach Anspruch 7 ist **dadurch gekennzeichnet, dass** die Wände (21, 22 und 24) des eckigen Vorsprungs und die Wände (23, 25 und 26) der eckigen Ausnehmung mit der tangentialen Ebene spitze Winkel α₁ bis α₄ bilden, die gleich oder verschieden sind.

9. Die Lamelle nach Anspruch 7 ist **dadurch gekennzeichnet, dass** die zusammenhängende Fläche (5) die Form eines Sechsecks hat.

10. Die Lamelle nach Anspruch 7 ist **dadurch gekennzeichnet, dass** die zusammenhängende Fläche (5) die Form eines Vierecks hat.

11. Die Lamelle nach Anspruch 7, 9 oder 10 ist **dadurch gekennzeichnet, dass** die zusammenhängende Fläche (5) sie schiefe Wand (3) in der Mitte der Entfernung zwischen den parallelen Armflächen schneidet (unterbricht).

12. Die Lamelle nach Anspruch 7 ist **dadurch gekennzeichnet, dass** sie zwei Formelemente (4) enthält, die in der festgelegten radialen Tiefe symmetrisch auf der viermal gebrochenen Fläche (1,2,3) angeordnet sind, zwei Armflächen (1), eine Armfläche (2) enthalten, die durch zwei schiefe Wände (3) verbunden sind, dass sie den stilisierten Buchstaben U bilden.

## Revendications

1. Bande de roulement de bandage pneumatique possédant au moins une rangée de blocs placés le long de la pneumatique, dans laquelle au moins un de ces blocs possède un ou plusieurs crans à lamelle 3D profilés dans la direction radiale, ce cran à lamelle formé étant limité par deux surfaces opposées - côtés du cran à lamelle, formées lors de la vulcanisation, **caractérisée en ce que** chaque côté du cran à lamelle 3D a la forme d'une surface double coudée en formé de la lettre Z, possédant dans la profondeur radiale définie au moins un élément profilé (4) découpant la surface coudée mentionnée à l'intervalle (AB), cette surface coudée possédant les surfaces des ailes parallèles, à savoir la première surface d'aile (1) et la deuxième surface d'aile (2) reliées ensemble par une paroi oblique (3), et au moins une des surfaces d'aile parallèles (1,2) possède dans la direction tangentielle au moins un élément profilé, formé par une saillie angulaire dans la direction radiale et limitée par les parois (21, 22 et 24), et la deuxième surface d'aile parallèle possède l'évidement angulaire dans la direction radiale et limitée par les parois (23, 25 et 26) dans la même profondeur radiale, la saillie angulaire du même plan parallèle (1) étant muni d'un sommet de forme plane et l'évidement angulaire de l'autre plan parallèle (2) étant muni d'un fond de forme plane, le sommet et le fond étant reliés de sorte à former une surface continue (5), disposée dans la direction radiale en parallèle avec les surfaces des ailes (1,2) et coupant la paroi oblique (3).

2. Bande de roulement de bandage pneumatique selon la revendication 1, **caractérisée en ce que** les parois (21, 22 et 24) et les parois (23, 25 et 26) forment avec le plan tangentiel des angles aigus α₁ à α₄, identiques ou différents.

3. Bande de roulement de bandage pneumatique selon la revendication 1, **caractérisée en ce que** la surface continue (5) formée par l'assemblage du fond de l'évidement et le sommet de la saillie a la forme hexagonale.

4. Bande de roulement de bandage pneumatique selon la revendication 1, **caractérisée en ce que** la surface continue (5) formée par l'assemblage du fond de l'évidement et le sommet de la saillie a la forme quandrangulaire.

5. Bande de roulement de bandage pneumatique selon la revendication 1, 3 ou 4, **caractérisée en ce que** la surface continue (5) croise (coupe) la paroi oblique au milieu de la distance entre les surfaces d'aile parallèles (1, 2).

6. Bande de roulement de bandage pneumatique selon la revendication 1, **caractérisée en ce que** chaque côté du cran à lamelle comprend deux éléments profilés (4) disposés de façon symétrique dans la profondeur radiale définie sur la surface 4x coudée, comprenant deux surfaces d'aile (1), une surface d'aile (2), étant reliées par deux parois obliques (3) de façon à former la lettre U.

7. Lame de moule, appropriée pour un montage à l'intérieur d'une moule de vulcanisation pour la formation d'une lamelle dans la bande de roulement selon une des reventications 1 à 6, **caractérisée en ce que** a la forme d'une surface au moins double coudée en forme de la lettre Z, munie dans la profondeur radiale définie d'au moins un élément profilé (4) coupant la surface coudée (1,2,3) à l'intervalle (AB), la surface coudée possédant la première surface d'aile (1) et la deuxièle surface d'aile (2) reliées par une paroi oblique (3), et au moins une des surfaces d'aile parallèles (1,2) est dans la direction périphérique munie au moins d'un élément profilé, formé par une saillie angulaire dans la direction radiale et limité par les parois (21, 22 et 24), et la deuxième surface d'aile parallèle est munie au moins d'un évidement angulaire dans la direction radiale et limité par les parois (23, 25 et 26) dans la même profondeur radiale, la saillie angulaire étant munie d'un sommet de forme plane et l'évidement angulaire étant muni d'un fond de forme plane, le sommet et le fond étant reliés de sorte à former une surface continue (5), disposée dans la direction radiale en parallèle avec les surfaces des ailes (1,2) et coupant la paroi oblique (3).

8. Lame selon la revendication 7, **caractérisée en ce que** les parois (21, 22 et 24) de la saillie angulaire et les parois (23, 25 et 26) de l'évidement angulaire forment avec le plan tangentiel les angles aigus α₁ à α₄, identiques ou différents.

9. Lame selon la revendication 7, **caractérisée en ce que** la surface continue (5) a la forme hexagonale.

10. Lame selon la revendication 7, **caractérisée en ce que** la surface continue (5) a la forme quandrangulaire.

11. Lame selon la revendication 7, 9 ou 10, **caractérisée en ce que** la surface continue (5) croise (coupe) la paroi oblique (3) au milieu de la distance entre les surfaces d'aile parallèles.

12. Lame selon la revendication 7, **caractérisée en ce que** comprend deux éléments profilés (4) disposés de façon symétrique dans la profondeur radiale définie sur la surface 4x coudée (1,2,3), comprenant deux surfaces d'aile (1), une surface d'aile (2), étant reliées par deux parois obliques (3) de façon à former la lettre U.
